# EUROPÄISCHE PATENTSCHRIFT

(11) **EP 0 934 185 B1**
(45) Veröffentlichungstag und Bekanntmachung des Hinweises auf die Patenterteilung: **19.03.2003**
(21) Anmeldenummer: 97950035.2
(22) Anmeldetag: 28.10.1997
(51) Int. Cl.: B60S 1/38

(54) **SCHEIBENWISCHERBLATT**
WIPER BLADE
BALAI D'ESSUIE-GLACE

(30) Priorität: 29.10.1996 DE 19644986; 26.05.1997 DE 19730099
(43) Veröffentlichungstag der Anmeldung: 11.08.1999
(73) Patentinhaber: Seeger Marketing + Consulting GmbH, 76555 Gaggenau (DE)
(72) Erfinder: SEEGER, Walter, D-76571 Gaggenau (DE)
(74) Vertreter: Säger, Manfred
(86) Internationale Anmeldenummer: EP9705951
(87) Internationale Veröffentlichungsnummer: WO98018663

(56) Entgegenhaltungen:
- DE-A- 3 337 815
- DE-A- 3 504 549
- DE-A- 3 716 697
- FR-A- 1 497 802
- FR-A- 2 630 383
- US-A- 4 723 336
- US-A- 5 392 488

## Beschreibung

Die Erfindung betrifft ein Scheibenwischerblatt gemäß dem Oberbegriff des Hauptanspruchs.

Solche Scheibenwischerblätter dienen zum Wischen der Frontscheiben von Kraftfahrzeugen. Sie weisen hierbei einen Haltebereich auf, an dem der Wischerarm angegreift. Auf der dem Haltebereich gegenüberliegenden Seite des Scheibenwischerblatts ist der die Wischkante aufweisende eigentliche Wischerbereich in Form einer Lamelle angeordnet.

Mit diesem Scheibenwischerblatt nach dem Stand der Technik ist nur eine mäßige Reinigung der Scheibe möglich. Selbst bei Einsatz einer Scheibenwischanlage ist nicht sichergestellt, daß eine ausreichende Säuberung der Scheibe erfolgen kann, weil der Strahl an Reinigungsflüssigkeit aus der Spritzdüse der Scheibenwaschanlage infolge des Fahrtwindes nicht genau an der Scheibe plaziert werden kann. Außerdem funktioniert ein Wischerblatt nur dann optimal, wenn die Wischkante auf der Scheibe einen Winkel von um die 45° bildet. Um die Kippfunktion bei der Vor- und Rückbewegung des Wischers zu ermöglichen, ist deshalb bei den bekannten Wischern ein Umlegsteg vorhanden, der das kippen des Wischbereiches bei der Hin- und Herbewegung des Wischers ermöglicht. Da dieser Steg aber gleichzeitig einen gewissen Druck auf die Wischerlippe senkrecht zur Oberfläche der Scheibe bringen muß und er funktionell bedingt andererseits weich ist, ist der optimale Winkel nur in den seltensten Fällen zufällig erreichbar.

Es ist ferner ein gattungsgemäßes Scheibenwischerblatt gemäß dem Oberbegriff des neuen Patentanspruchs 1 bekannt (DE-A-37 16 697 A1).

Jedoch ist es bei dem bekannten Scheibenwischerblatt nicht bekannt, daß der Halte- und der Wischbereich um eine parallel zu der zumindest einen Wischkante verlaufenden Achse schwenkbar sind.

Es ist weiterhin ein Scheibenwischerblatt bekannt (US-A-4 723 336), bei dem aber eine starre, nicht schwenkbare Befestigung vorgesehen ist, also gerade eine schwenkbare Ausgestaltung des Halte- und Wischbereichs in bezug auf eine parallel zur Wischkante verlaufende Achse nicht vorschlägt.

Es ist jedoch auch bekannt (US-A-5 392 488 aus Spalte 2, Zeilen 3 bis 40), bei einem Scheibenwischerblatt den Halte- und Wischbereich verschwenkbar auszubilden, es gibt jedoch keinerlei Anregung dahin, das Scheibenwischerblatt so auszubilden, daß der Halte- und Wischbereich unter Bildung von jeweils einem insbesondere für eine Spülflüssigkeit vorgesehenen (Wisch-)Kanal entsprechend der Bewegungsrichtung des Scheibenwischerblatts dreh- oder kippbar ist; Überdies weist dieses bekannte Scheibenwischerblatt keinen Kanal für eine Spülflüssigkeit oder dergleichen auf, zum anderen liegen die beiden Wischbereiche 41 bei der Wischbewegung gar nicht gleichzeitig auf der Scheibe auf.

Der Erfindung liegt die Aufgabe zugrunde, ein Scheibenwischerblatt so weiterzubilden, daß eine stets hinreichende Reinigung des Wischerblattes auch nach wenigen Bewegungen des Wischerarmes sichergestellt ist.

Diese Aufgabe wird bei einem gattungsgemäßen Scheibenwischerblatt gemäß dem Oberbegriff des Hauptanspruchs erfindungsgemäß durch dessen kennzeichnende Merkmale gelöst.

In einer Ausgestaltung der Erfindung sind der Halte- sowie der Wischbereich um einen bestimmten Winkel gelenkig verschwenk-, jedoch lösbar miteinander verbunden, beispielsweise durch einen im wesentlichen kreisförmigen Vorsprung oder eine Ausnehmung im Haltebereich des Wischerblattes. Um die maximale Verschwenkbewegung genau zu definieren sind an der Halteeinrichtung des Wischerarms und/oder dem Haltebereich des Wischerblattes Anschläge vorgesehen, die bei der Hinund Herbewegung des Wischers so kippen, daß eine der beiden dazu benachbart außenliegenden. weiteren Wischkanten auf der zu wischenden Scheibe, vorzugsweise Windschutzscheibe eines Kraftfahrzeugs in einem definierten Winkel, vorzugsweise 45° aufliegen.

Durch Ausbildung des Haltebereichs mit einem formstabilen harten Kunststoff ist es weiterhin möglich, den Krafteinleitungsmittelpunkt in ideal kurzem Abstand von der Scheibe, vorzugsweise drei bis 4 mm davor anzuordnen, um die Wischkanten fest in Richtung auf die Scheibe drücken zu können. Andererseits ist durch die Verschwenkbarkeit des Wischerblattes insgesamt in eine definierte Winkelstellung stets der optimale Wischwinkel erzielbar. Hierbei kann es zweckmäßig sein, auf den formstabilen Kunststoff des Haltebereichs einen abriebfesten Kunststoff, vorzugsweise ein Elastomer aufzubringen, der im Wischbereich den eigentlichen Kontakt zu der Windschutzscheibe bewerkstelligt. Diese Ausführungsform kann in einfacher Weise auf die Halteeinrichtung des Wischerarms mit dem Haltebereich unter geringer Kraftaufwendung und unter Bildung einer formschlüssigen Übertotpunktblockierung durch Zusammendrücken der Teile eingerastet werden. Indem die Aufnahmebereiche an der Halteeinrichtung etwas größer bemessen sind als die Haltebereiche des Wischerblattes, ist dessen axiales Spiel in dem Wischerarm gewährleistet.

Andere zweckmäßige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: eine schematische Seitenansicht eines Wischerarmes eines nicht zur Erfindung gehörenden Scheibenwischerblatts
- Figur 2: einen Schnitt II-II gemäß Fig. 16
- Figur 3: eine Ausführungsform eines Wischerblattes, in schematischem Querschnitt;
- Figur 4: eine weitere Ausführungsform eines Wischerblattes, in schematischem Querschnitt;
- Figuren 5 und 6: die beiden definierten maximalen Winkellagen des Wischerblattes der Ausführungsform gemäß Figur 3, im schematischen Querschnitt.

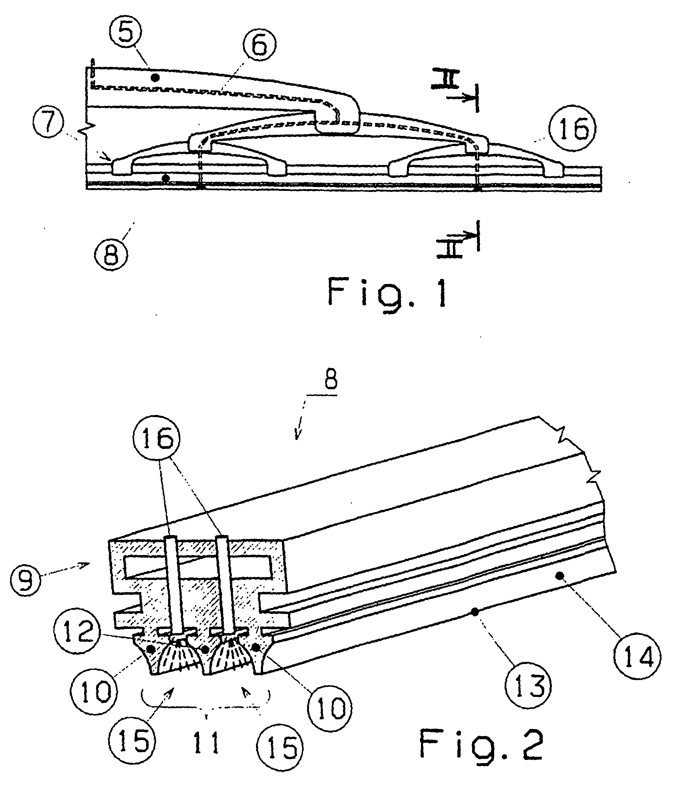

Der insgesamt mit 5 bezeichnete Scheibenwischerarm kann in seinem Inneren eine Zuführleitung 6 für eine Reinigungsflüssigkeit aufweisen. An seinem vorderen Ende ist er in ansich bekannter Weise mit einer Halteeinrichtung 7 versehen, die an der Rückseite des dort mit einem Haltebereich 9 versehenen, als Lamelle ausgebildeten Scheibenwischerblatts angreift. Das Scheibenwischerblatt ist im Schnitt in Fig. 2 näher dargestellt. Es weist den insgesamt mit 9 bezeichneten Haltebereich auf und drei parallel zueinander verlaufende Lamellen mit je einer Wischkante als Wischbereich 11 auf, und zwar im einzelnen zwei äußere Lamellen 10 und eine mittlere Lamelle 12 mit jeweils der Wischkante 13, wobei die voneinander abgewandten äußeren Bereiche 14 der äußeren Lamellen 10 eine rauhe Beschichtung zur Beseitigung von groben Verunreinigungen auf der Scheibe aufweist.

Parallel zu und beiderseits der mittleren Lamelle 12 wird hierdurch je ein Kanal 15 für die Spülflüssigkeit gebildet, die über eine Zuführöffnung am Ende eines insgesamt mit 16 bezeichneten Rohrs jedem Kanal zugeführt wird. Hierbei können zwei oder mehrere solcher Zuführungen vorgesehen sein. Außerdem können auch die Kanäle an ihren beiden Enden überdies geschlossen sein, oder aber nur an einem Ende.

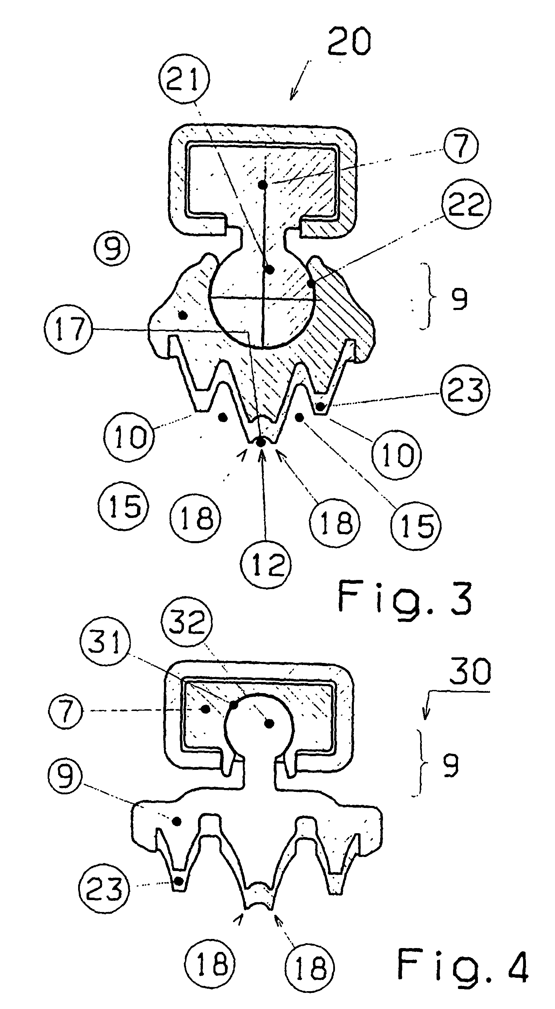

Die Ausführungsform gemäß Figur 3 weist eine Halteeinrichtung 7 an dem - nur im schematischen Querschnitt gezeigten Wischerblatt - auf. Diese insgesamt mit 20 bezeichnete Ausführungsform weist einen im Querschnitt im wesentlichen kreisförmigen Vorsprung 21 auf, der in eine entsprechend geformte Ausnehmung 22 im Haltebereich 9 des Wischerblattes 20 aus einem harten, formstabilen Kunststoff eingesetzt ist. Der Wischbereich im Bereich der zumindest einen Wischkante 12 und der beiden zumindest je einen weiteren Wischkante 10 kann aus einem abriebfesten Kunststoff, vorzugsweise einem Elastomer 23 gebildet sein. Auch die beiden Kanäle 15 können von diesem Elastomer 23 ausgekleidet sein.

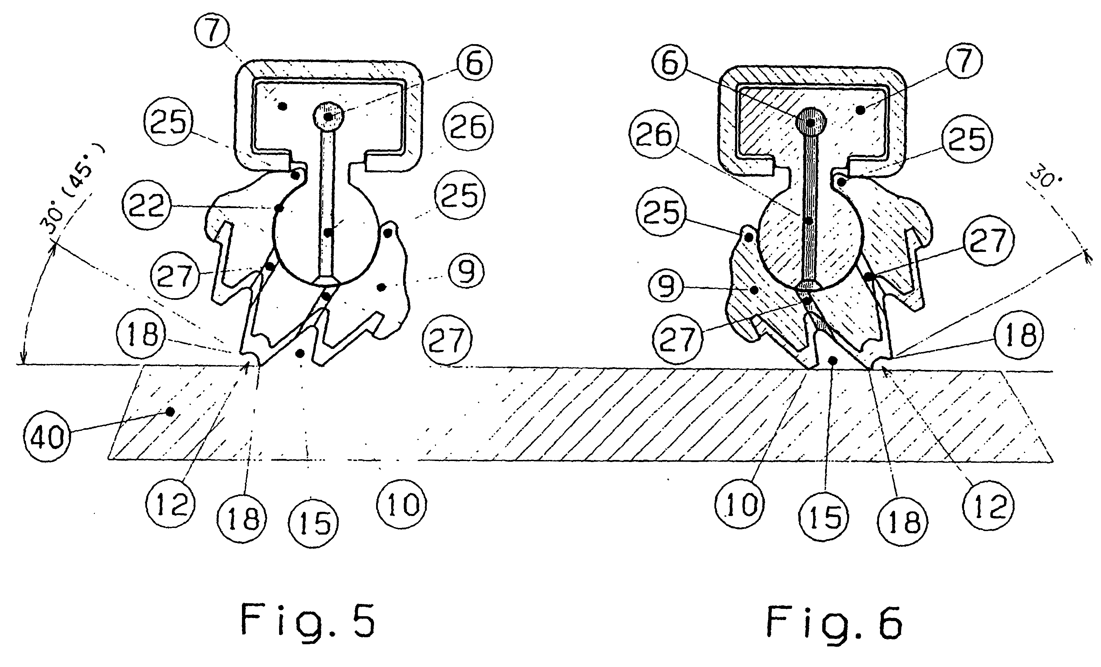

Die Ausführungsform 30 gemäß Figur 4 weist eine Ausnehmung 31 im Bereich der Halteeinrichtung 7 des Wischerblattes auf, die im wesentlichen kreisförmig ausgebildet ist und in die ein Vorsprung 32 der Halteeinrichtung des Wischerblattes 30 eingreift, welches auch im wesentlichen im Querschnitt kreisförmig ausgebildet ist.

Die Ausführungsform des Wischerblattes 20 gemäß Figur 3 ist in den Figuren 5 und 6 näher dargestellt, und zwar in den beiden maximalen Kipp- bzw. Verdrehstellungen bei der Hin- und Herbewegung des Scheibenwischerarms auf der Windschutzscheibe 40. Deutlich ersichtlich ist, daß die maximale Verschwenkbewegung durch zwei an dem Haltebereich 9 vorgesehenen Anschläge 25, die an der Halteeinrichtung 7 in den beiden Extremlagen jeweils zur Anlage kommen. Ferner ist deutlich, daß die zumindest eine Wischkante 12 und je eine der weiteren Wischkanten 10 auf der Oberfläche der Windschutzscheibe 40 einen definierten Winkel zwischen 30 und 45° bei den beiden entgegengesetzten Wischbewegungen bilden. Außerdem ist ersichtlich, daß zwischen den beiden anliegenden Wischkanten 10 und 12 je ein Kanal 15 völlständig abgeschlossen ist. Hierbei ist es von Vorteil, wenn die zumindest eine Wischkante 12 eine konkave Ausnehmung 17 unter Bildung einer Zwillingswischkante 18 aufweist.

Außerdem ist in der Halteeinrichtung 7 ein sich längs desselben erstreckende Zuführleitung 6 für eine Spülflüssigkeit vorgesehen, die über eine Speiseleitung 26 im vorderen Teil des Vorsprungs 21 mündet. In der Halteeinrichtung 9 ist zu jedem der beiden Kanäle 15 eine Verbindungsleitung 27 vorgesehen, die in der jeweiligen gezeigten Extremstellung gemäß den Figuren 5 und 6 bei der Hin- bzw. Herbewegung des Wischerarmes mit der Zuführleitung 6 in dem Wischerarm verbunden ist, so daß in diesem Bereich die Windschutzscheibe 40 mit der Spülflüssigkeit benetzt und/oder abgeriebene Teilchen wegtransportiert werden können.

## Patentansprüche

1. Scheibenwischerblatt (8), insbesondere für die Windschutzscheibe eines Kraftfahrzeugs, mit einem Haltebereich (9) und mit einem zumindest eine Wischkante (13) aufweisenden Wischbereich (11), wobei parallel zu und beiderseits der zumindest einen Wischkante (12) zumindest je eine weitere Wischkante (10) unter Bildung je eines Kanals (15), vorzugsweise für eine Spülflüssigkeit, angeordnet ist,
**dadurch gekennzeichnet,**
**daß** der Haltebereich (9) und der Wischbereich (11) um eine parallel zu der zumindest einen Wischkante (12) verlaufende Achse schwenkbar sind.

2. Wischerblatt nach Anspruch 1, **dadurch gekennzeichnet, daß** der Kanal (15) vollständig an zumindest einem seiner beiden Enden abgeschlossen ist (vgl. Figuren 1 und 2).

3. Wischerblatt nach Anspruch 1 oder 2, **dadurch gekennzeichnet, daß** zumindest einer der Kanäle (15) zumindest eine Zuführöffnung für die Spülflüssigkeit aufweist.

4. Wischerblatt nach einem der Ansprüche 1 bis 3, **dadurch gekennzeichnet, daß** die Zuführöffnung in den hohl ausgebildeten Haltebereich (9) mündet, der mit der Spülflüssigkeit füllbar ist.

5. Wischerblatt nach einem der Ansprüche 1 bis 3, **dadurch gekennzeichnet, daß** die Zuführöffnung das Ende eines Rohrs (16) ist, welches durch den Haltebereich (9) hindurchgeführt ist und dessen anderes Ende außerhalb des Haltebereichs (9) mündet.

6. Wischerblatt nach einem der Ansprüche 1 bis 5, **dadurch gekennzeichnet, daß** der Wischerbereich (11) mit der Wischkante (13) als Lamelle ausgebildet ist, wobei die voneinander abgewandten äußeren Bereiche (14) der beiden äußeren Lamellen (10) eine rauhe Beschichtung aufweisen.

7. Wischerblatt nach einem der Ansprüche 1 bis 6, **dadurch gekennzeichnet, daß** die zumindest eine Wischkante im Querschnitt eine konkave Ausnehmung unter Bildung einer Zwillingswischkante aufweist (vgl. Figuren 3 bis 6).

8. Wischerblatt nach einem der Ansprüche 1 bis 7, **dadurch gekennzeichnet, daß** der Haltebereich (9) und der Wischbereich (11) um einen bestimmten Winkel verschwenkbar gelenkig, jedoch lösbar untereinander verbunden sind.

9. Wischerblatt nach Anspruch 8, **dadurch gekennzeichnet, daß** der Haltebereich (9) als eine im Querschnitt im wesentlichen kreisförmige Ausnehmung (vgl. Fig. 3) oder als ein im Querschnitt im wesentlichen kreisförmiger Vorsprung (vgl. Fig. 4) ausgebildet ist.

10. Wischerblatt nach einem der Ansprüche 1 bis 9, **dadurch gekennzeichnet, daß** die Achse im wesentlichen durch den Mittelpunkt der im Querschnitt kreisförmigen Ausnehmung bzw. des kreisförmigen Vorsprungs verläuft.

11. Wischerblatt nach einem der Ansprüche 1 bis 10, **dadurch gekennzeichnet, daß** jeweils eine der zumindest je einen weiteren Wischkante (10) und die zumindest eine Wischkante (12) in einem definierten Winkel auf der Windschutzscheibe in jeder der beiden maixmalen Verschwenkstellungen zwischen dem Haltebereich (9) und dem Wischbereich (11) aufliegt.

12. Wischerblatt nach Anspruch 11, **dadurch gekennzeichnet, daß** der definierte Winkelbereich zwischen 30° und 60°, vorzugsweise bei 45° liegt.

13. Wischerblatt nach einem der Ansprüche 1 bis 12, **dadurch gekennzeichnet, daß** die Halteeinrichtung und/oder der Haltebereich mit Anschlägen für die maximale Verschwenkbewegung versehen sind.

14. Wischerblatt nach einem der Ansprüche 1 bis 13, **dadurch gekennzeichnet, daß** das Wischerblatt von einem harten, formstabilen Kunststoff gebildet ist.

15. Wischerblatt nach einem der Ansprüche 1 bis 14, **dadurch gekennzeichnet, daß** der Wischbereich (11) von einem abriebfesten Kunststoff, vorzugsweise einem Elastomer gebildet ist.

16. Wischerblatt nach einem der Ansprüche 1 bis 15, **dadurch gekennzeichnet, daß** in dem Vorsprung eine Speiseleitung (6) vorgesehen ist.

17. Wischerblatt nach Anspruch 16, **dadurch gekennzeichnet, daß** in dem als Ausnehmung (22) ausgebildeten Haltebereich je eine zu einem der beiden Kanäle (15) führende Verbindungsleitung (27) mündet.

## Claims

1. Wiper blade (8), especially for the windscreen of a motor vehicle, with a fixing portion (9) and a wiping portion (11) providing at least one wiping edge (13), wherein, parallel to and on each of the two sides of the at least one wiping edge (12), at least one additional wiping edge (10) is arranged thereby forming one channel (15) on each side, preferably for a liquid cleanser,
**characterised in that**,
the fixing portion (9) and the wiping portion (11) are rotatable around an axis running parallel to the at least one wiping edge (12).

2. Wiper blade according to claim 1 **characterised in that** the channel (15) is completely enclosed on at least one of its two ends (cf. Figures 1 and 2).

3. Wiper blade according to claim 1 or 2, **characterised in that** at least one of the channels (15) provides at least one supply opening for the liquid cleanser.

4. Wiper blade according to any one of claims 1 to 3, **characterised in that** the supply opening opens into the fixing portion (9) which is designed to be hollow and can be filled with the liquid cleanser.

5. Wiper blade according to any one of claims 1 to 3, **characterised in that** the supply opening is the end of a tube (16) which is fed through the fixing portion (9) and the other end of which opens outside the fixing portion (9).

6. Wiper blade according to any one of claims 1 to 5, **characterised in that** the wiping portion (11) with the wiping edge (13) is designed as a lamella, whereby the outer portions (14) of the two outer lamellae (10) facing away from one another provide a rough coating.

7. Wiper blade according to any one of claims 1 to 6, **characterised in that** the cross-section of the at least one wiping edge provides a concave recess thereby forming a twin wiping edge (cf. Figures 3 to 6).

8. Wiper blade according to any one of claims 1 to 7, **characterised in that** the fixing portion (9) and the wiping portion (11) are connected to one another in an articulated but detachable manner which allows them to be rotated through a given angle.

9. Wiper blade according to claim 8, **characterised in that** the fixing portion (9) is designed as a recess of substantially circular cross-section (cf. Figure 3) or as a projection of substantially circular cross-section (cf. Figure 4).

10. Wiper blade according to any one of claims 1 to 9, **characterised in that** the axis runs essentially through the centre point of the recess or projection of circular cross-section.

11. Wiper blade according to any one of claims 1 to 10, **characterised in that**, in each of the two maximum rotational positions between the fixing portion (9) and the wiping portion (11), one of the at least one additional wiping edges (10) and the at least one wiping edge (12) bears upon the windscreen at a defined angle.

12. Wiper blade according to claim 11, **characterised in that** the range of the defined angle is between 30° and 60°, preferably 45°.

13. Wiper blade according to any one of claims 1 to 12, **characterised in that** the fixing device and/or the fixing portion are provided with stops for the maximum rotational movement.

14. Wiper blade according to any one of claims 1 to 13, **characterised in that** the wiper blade is formed from a hard, structurally stable synthetic material.

15. Wiper blade according to any one of claims 1 to 14, **characterised in that** the wiping portion (11) is formed from an abrasion-resistant synthetic material, preferably an elastomer.

16. Wiper blade according to any one of claims 1 to 15, **characterised in that** a supply line (6) is provided in the projection.

17. Wiper blade according to claim 16, **characterised in that**, in each case, a connecting line (27) leading to one of the two channels (15) opens into the fixing portion designed as a recess (22).

## Revendications

1. Balai d'essuie-glace (8), en particulier pour le pare-brise d'un véhicule à moteur, avec une zone de maintien (9) et une zone d'essuyage (11) présentant au moins un premier bord d'essuyage (12), au moins un autre bord d'essuyage (10) étant disposé parallèlement au premier bord d'essuyage en définissant un canal (15), de préférence pour un liquide de lavage, **caractérisé en ce que** la zone de maintien (9) et la zone d'essuyage (11) peuvent être pivotées autour d'un axe s'étendant parallèlement au premier bord d'essuyage (12).

2. Balai d'essuie-glace selon la revendication 1, **caractérisé en ce que** le canal (15) est entièrement fermé à au moins une de ses deux extrémités (voir figures 1 et 2).

3. Balai d'essuie-glace selon la revendication 1 ou 2, **caractérisé en ce qu'**au moins un des canaux (15) présente au moins une ouverture d'arrivée pour le liquide de lavage.

4. Balai d'essuie-glace selon l'une des revendications 1 à 3, **caractérisé en ce que** l'ouverture d'arrivée débouche dans la zone de maintien (9) formée en creux, qui peut être remplie du liquide de lavage.

5. Balai d'essuie-glace selon l'une des revendications 1 à 3, **caractérisé en ce que** l'ouverture d'arrivée est l'extrémité d'un tuyau (16) qui passe à travers la zone de maintien (9) et dont l'autre extrémité débouche à l'extérieur de la zone de maintien (9).

6. Balai d'essuie-glace selon l'une des revendications 1 à 5, **caractérisé en ce que** la zone d'essuyage (11) avec le bord d'essuyage (13) est formée comme une lamelle, les zones extérieures (14) opposées l'une à l'autre des deux lamelles extérieures (10) présentant un revêtement rugueux.

7. Balai d'essuie-glace selon l'une des revendications 1 à 6, **caractérisé en ce que** le bord d'essuyage au moins unique présente en coupe un évidement concave en formant un bord d'essuyage jumelé (voir les figures 3 à 6).

8. Balai d'essuie-glace selon l'une des revendications 1 à 7, **caractérisé en ce que** la zone de maintien (9) et la zone d'essuyage (11) sont reliées entre elles de manière articulée en pivotant d'un certain angle, mais de manière séparable.

9. Balai d'essuie-glace selon la revendication 8, **caractérisé en ce que** la zone de maintien (9) est conçue comme un évidement de forme essentiellement circulaire en coupe (voir figure 3) ou comme une saillie essentiellement de forme circulaire en coupe (voir la figure 4).

10. Balai d'essuie-glace selon l'une des revendications 1 à 9, **caractérisé en ce que** l'axe passe essentiellement par le centre de l'évidement de forme circulaire en coupe, respectivement de la saillie de forme circulaire.

11. Balai d'essuie-glace selon l'une des revendications 1 à 10, **caractérisé en ce qu'**un autre bord d'essuyage (10) au moins unique et le bord d'essuyage (12) au moins unique reposent sur le pare-brise avec un angle défini dans chacune des deux positions de pivotement maximales entre la zone de maintien (9) et la zone d'essuyage (11).

12. Balai d'essuie-glace selon la revendication 11, **caractérisé en ce que** la zone angulaire définie est située entre 30° et 60°, de préférence égale à 45°.

13. Balai d'essuie-glace selon l'une des revendications 1 à 12, **caractérisé en ce que** le dispositif de maintien et/ou la zone de maintien sont prévus avec des butées pour le mouvement de pivotement maximal.

14. Balai d'essuie-glace selon l'une des revendications 1 à 13, **caractérisé en ce que** le balai d'essuie-glace est formé par une matière plastique dure, indéformable.

15. Balai d'essuie-glace selon l'une des revendications 1 à 14, **caractérisé en ce que** la zone d'essuyage (11) est formée par une matière plastique résistant à l'usure, de préférence un élastomère.

16. Balai d'essuie-glace selon l'une des revendications 1 à 15, **caractérisé en ce qu'**une tuyauterie d'alimentation est prévue dans la saillie.

17. Balai d'essuie-glace selon la revendication 16, **caractérisé en ce qu'**une tuyauterie de liaison (27) menant à l'un des deux canaux (15) débouche dans la zone de maintien formée comme un évidement (22).
